Europäisches Patentamt

European Patent Office

Office européen des brevets

(19)

(11)     EP 1 450 546 A2

(12)     **EUROPEAN PATENT APPLICATION**

(43) Date of publication:
    **25.08.2004   Bulletin 2004/35**

(51) Int Cl.⁷: $H04M\ 1/57$

(21) Application number: **04003839.0**

(22) Date of filing: **20.02.2004**

(84) Designated Contracting States:
    **AT BE BG CH CY CZ DE DK EE ES FI FR GB GR
    HU IE IT LI LU MC NL PT RO SE SI SK TR**
    Designated Extension States:
    **AL LT LV MK**

(30) Priority:  **20.02.2003  US 448518 P**

(71) Applicant: **Integration Associates Inc.
    Mountain View, CA 94040 (US)**

(72) Inventors:
    • **Holcombe, Wayne T.
      Mountain View, CA 94040 (US)**
    • **Konecny, Pavel
      Sunnyvale, CA 94086 (US)**

(74) Representative:
    **Banzer, Hans-Jörg, Dipl.-Ing. et al
    Kraus & Weisert,
    Thomas-Wimmer-Ring 15
    80539 München (DE)**

(54)     **Method and apparatus for isolation in a caller ID or call monitor interface circuit**

(57)     A caller ID circuit is shown that uses resistors as a caller ID interface to a telephone line pair. The circuit includes a differential transconductance amplifier coupled to the telephone line pair using resistors and a common mode canceling transconductance amplifier coupled to the telephone line pair using the resistors. The invention also includes a gyrator transconductance amplifier coupled to the differential transconductance amplifier and the common mode canceling transcon- ductance amplifier that is configured to generate an output current corresponding to a caller ID signal present at the telephone line pair. In a further refinement of the invention, the resistors are accurate resistors. In another refinement of the invention, the circuit further includes an analog to digital converter (ADC) coupled to the gyrator transconductance amplifier, where the ADC converts the output current from the gyrator transconductance amplifier into a pulse-width-modulated (PWM) signal.

EP 1 450 546 A2

FIG. 2

**Description**

FIELD OF THE INVENTION

The present invention is directed toward an improved method for receiving signals across an isolation barrier, in particular, a pre-amplifier suitable for use with a pulse width modulation (PWM) type analog-to-digital (A/D) converter suitable for on-hook (Type 1) Caller ID and other telephone line monitor functions.

BACKGROUND OF THE INVENTION

On-Hook telephone line monitoring is a useful function most commonly used for (Type 1) Caller ID but also for other functions, such as call monitoring, Voice/FAX steering, and line-in-use detection. Caller ID is a common auxiliary function available on world-wide telephone systems. A key component of circuitry used to decode Caller ID and other line monitoring functions is a line interface that can receive signals from the telephone line while on-hook. In the North American telephone system, for example, the Caller ID signal is a 1200 bit per second frequency shift key (FSK) signal using 1200Hz, Mark and 2200Hz, Space. The Caller ID is sent as a burst of several hundred bits down the telephone line from the Central Office approximately one-half second after the first ring signal. In other national systems, the signal is sometimes sent before the first ring, but after an alerting line polarity reversal. The purpose of the on-hook Caller ID signal is to alert the user to the caller's number before answering.

Without disrupting a call in progress, on-hook interface circuits, which are suitable for Caller ID, can also be used to provide other useful telephone line monitor functions, such as on-hook monitoring of call traffic, voice/FAX steering, and line-in-use detection. Call monitoring allows a computerized system to log telephone calls sent and received on a phone line, typically for security, billing, or call history information. Voice/FAX steering allows a FAX machine to pick-up a call answered by an answering machine or human by detecting either a FAX calling tone or a specific touch tone code. Line-in-use allows a telephone device, typically a FAX machine or a modem, to determine if the line is already in use before attempting to go off-hook. The line-in-use function is especially important for automatic dialing devices sharing a phone line with human users.

In Caller ID or line monitor devices, there are two classes of telephone line interface, isolated and non-isolated. Like data access arrangements (DAAs), isolated interfaces provide regulatory isolation between the telephone line and the Caller ID demodulator circuit. Caller ID interfaces are commonly included in DAAs since the Caller ID demodulation can readily be included as a subset of the other modem demodulation protocols executed by the a modem or FAX modem digital signal processor (DSP). Isolated interfaces are used in many modems, FAX machines, and satellite TV boxes. Where non-isolated interfaces are used between the phone line and the Caller ID demodulation circuitry, usually the whole circuit board and case are isolated and power is provided either by battery, telephone line power, or a low voltage output isolated wall transformer. Examples of non-isolated interfaces are battery powered Caller ID displays, many answering machines, and cordless telephones. This invention is directed toward isolated Caller ID and line monitor interfaces and a pulse width modulation (PWM) analog-to-digital (A/D) converter suitable for these functions.

Present State of the Art:

Caller ID and line monitor interface circuits need to meet regulatory on-hook DC and AC impedance requirements. Differential DC resistance needs to be over 5 Meg ohms to meet US FCC part 68 and AC impedance should exceed 80K ohm to minimize loading. These impedance limits also generally satisfy most world wide telephone regulatory requirements.

In addition, isolated Caller ID and line monitor interface circuits need to be met.

Although not identified in Caller ID standards, such as EIA/TIA-716 and Telcordia SR-3004, AC voltages between the telephone line and an isolated Caller ID circuit ground may exceed 60VAC in the US and 120VAC in countries with 220VAC main distribution. Consequently, high common mode rejection at power line frequencies is very important. These high AC common mode signals may be present continuously in some end user environments. The high AC voltage is not on the telephone line but is much more likely on the Caller ID circuit ground. Most typically, this occurs due to a floating third wire safety ground on the AC power socket. Such floating grounds are not uncommon in older house wiring. If an electronic product with a switching supply is plugged into an AC socket with a floating common ground, typically as much as one-half of the AC mains voltage may be imposed on the ground due to the capacitors between the AC line and the chassis ground found in the electro-magnetic interference (EMI) line filter of the switching supply. If the common mode AC signals are too large and if the common mode rejection is too low, then excessive power line voltage will enter the Caller ID interface circuit and input amplifier causing overload and preventing proper Caller ID demodulation.

The minimum caller ID signal is 12mV and the maximum is 476mV RMS. Typically, to demodulate the Caller ID signal requires a signal to noise of about 15dB within the signal bandwidth of about 2KHz, so this means that the equivalent input noise at the A/D converter or Caller ID demodulator should be less than 2mV. This defines a dynamic range of the A/D converter or demodulator of 48dB. Ideally, the Caller ID circuit should still function with a common mode line AC line signal of 120V RMS, which is 96dB higher than the equivalent input noise of 2mV. Although a Caller ID system with a linear 9 bit A/D and using digital signal processor (DSP) filter algorithms can eliminate line frequency components as long as they don't exceed the maximum signal level of the A/D, though these solutions are typically more expensive than an automatic gain control (AGC) or zero crossing Caller ID demodulator that assumes that the Caller ID signal is always larger than any interferer signal. In such lower cost Caller ID systems, common mode line voltage rejection needs to exceed 90dB. Even with a Caller ID system capable of handling several hundred millivolts of common mode induced line voltage while decoding a minimum level Caller ID signal, the common mode rejection needs to exceed 55dB to prevent overload.

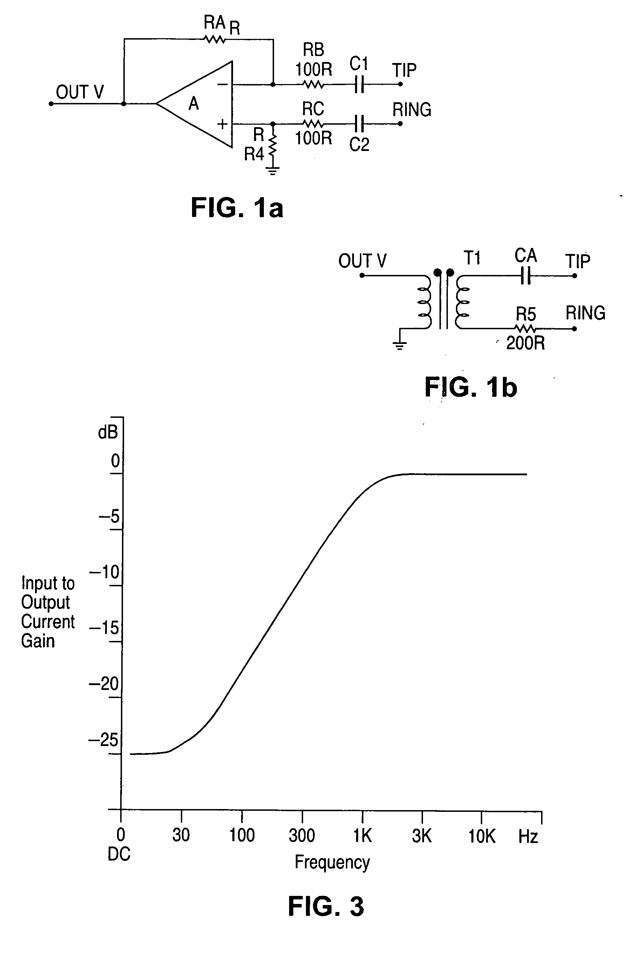

For isolated Caller ID interface circuits, audio signals are coupled across an isolation barrier typically through either a transformer or through a capacitor resistor isolation network. See the examples in Figs. 1a and I b. Although transformers provide excellent isolation and AC common mode rejection of over 80dB at AC power line frequencies, they are larger and have higher costs than the capacitor resistor network. Transformers are typically used where they are also needed for other reasons, usually where audio signals need to pass bi-directionally, such as in modems, FAX machines, non-isolated answering machines, etc. Resistor-capacitor (RC) networks are typically used where transformers are not used, such as in Caller ID only decoders, solid state DAAs, etc.

A capacitor resistor network requires the use of high voltage capacitors with break down voltages of over 1.5KV in order to withstand regulatory voltage isolation requirements. Such capacitors are significantly more expensive than standard low voltage capacitors. If the capacitors in the network are not accurately matched, then common mode rejection is poor. Although a 1% mismatch would produce a 40dB rejection, a 1% mismatch error is statistically unlikely with 1% components. Typically, 1% components will match within less than 0.3% producing a common mode rejection of at least 50dB. In order to further reduce the effects of line voltage, one technique is to roll off the audio response of the network below the Caller ID lower band limit around 600Hz by using small input capacitors, which typically have ten times higher impedance at 60Hz than at 600Hz. For example, with 1% capacitors, this input roll off technique can reduce common mode line voltage typically by 70dB (20db roll off + 50dB balance attenuation). However, 1.5KV, 1% matched capacitors are not available as high volume components. They can be produced as custom products but at 10 to 100 times the cost of equivalent value low voltage, low tolerance capacitors.

Another problem with both the transformer and resistor capacitor network is that they only pass AC signals. For line monitoring functions, it is useful to receive DC and line polarity information. DC can be used to determine if the line is on-hook, off-hook, or completely dead. Also, in some non-US countries, detecting line polarity reversal is useful to alert Caller ID processing circuitry to an incoming Caller ID signal. Although, the line polarity reversal can sometimes be detected on AC coupled interfaces as a transient, a simple off-hook or dial pulse can also produce the same transient. This ambiguity can most easily be resolved with absolute DC polarity information. Even if a technique is used to pass DC information across the barrier, A/D converters commonly used in modem and caller ID systems often do not process DC information. In addition, the DC line voltage can be over 50V, exceeding by 80dB the maximum noise floor of 2mV RMS (3mV Peak) necessary to demodulate a minimum amplitude Caller ID signal. Most low cost, low resolution A/D converters suitable for Caller ID demodulation do not have a dynamic range of this magnitude. Normally, for cost reasons, they are designed only to deal with the Caller ID dynamic range of about 48 dB.

Another problem with the RC network shown in Fig. 1a, is that when resistors R1 and R4 are included inside the integrated circuit (IC) for cost reduction and component reduction reasons, then the gain accuracy of the input degrades. This is because the absolute tolerance of IC resistors is usually about +-20%. This, coupled with a typically capacitor tolerance values of +-10%, results in a significant gain tolerance variation in excess of +-30% that may require somewhat larger dynamic range requirements on the A/D converter and the inability to set accurate detect thresholds.

BRIEF SUMMARY OF THE INVENTION

The present invention provides a telephone line interface circuit according to claim 1, a method for interfacing to a telephone line according to claim 8 and a telephone line interface device according to claim 21. The dependent claims define preferred or advantageous embodiments of the circuit, the method and the device, respectively.

One embodiment, in accordance with the present invention, of a caller ID circuit using resistors as a caller ID interface to a telephone line pair includes a differential transconductance amplifier coupled to the telephone line pair using resistors and a common mode canceling transconductance amplifier coupled to the telephone line pair using the resistors. This embodiment also includes a gyrator transconductance amplifier coupled to the differential transconductance amplifier and the common mode canceling transconductance amplifier and configured to output an output current corresponding to a caller ID signal present at the telephone line pair. In a further refinement of this embodiment, the resistors are accurate resistors. In another refinement of this embodiment, the circuit further includes an analog to digital converter (ADC) coupled to the gyrator transconductance amplifier, where the ADC converts the output current from the gyrator transconductance amplifier into a pulse-width-modulated (PWM) signal.

An embodiment of a method, according to the present invention, for interfacing to a telephone line calls for developing currents at circuit nodes T and R that are proportional to an input common mode voltage between Tip and Ring terminals of the telephone line and canceling a common mode signal at circuit nodes T and R by generating a differential pair of common mode current signals from a common mode signal present at circuit node T. The method also calls for generating a set of current signals that are proportional to a difference signal current at circuit node R that is representative of a differential voltage between Tip and Ring. The method further recites generating a direct current (DC) canceling current from a first one of the set of current signals that are proportional to a difference signal current at circuit node R and adding the DC canceling current to circuit node T. In a further refinement of this embodiment, the method also sets forth providing a frequency response pole having a predetermined cut-off frequency. In another refinement of this embodiment, the method includes generating a DC current and polarity signal proportional to the voltage between Tip and Ring from another one of the set of current signals that are proportional to a difference signal current at circuit node R. In still another refinement of this embodiment, the method involves converting the DC current and polarity signal to a pulse-width-modulation (PWM) encoded signal.

DETAILED DESCRIPTION OF THE INVENTION

A detailed description of the invention is set forth below where the present invention is discussed in the context of the following figures, wherein:

Figures 1a and 1b are circuit diagrams illustrating conventional approaches to line isolation;

Figure 2 is a circuit diagram illustrating one embodiment of a circuit in accordance with one aspect of the present invention;

Figure 3 is a frequency response graph illustrating input to output current gain as a function of frequency;

Figure 4 is a transistor level circuit diagram illustrating one embodiment of the gyrator transconductance amplifier shown in Figure 2;

Figure 5 is a transistor level circuit diagram illustrating one embodiment of the differential transconductance amplifier shown in Figure 2;

Figure 6 is a transistor level circuit diagram illustrating one embodiment of the common-mode canceling transconductance amplifier shown in Figure 2;

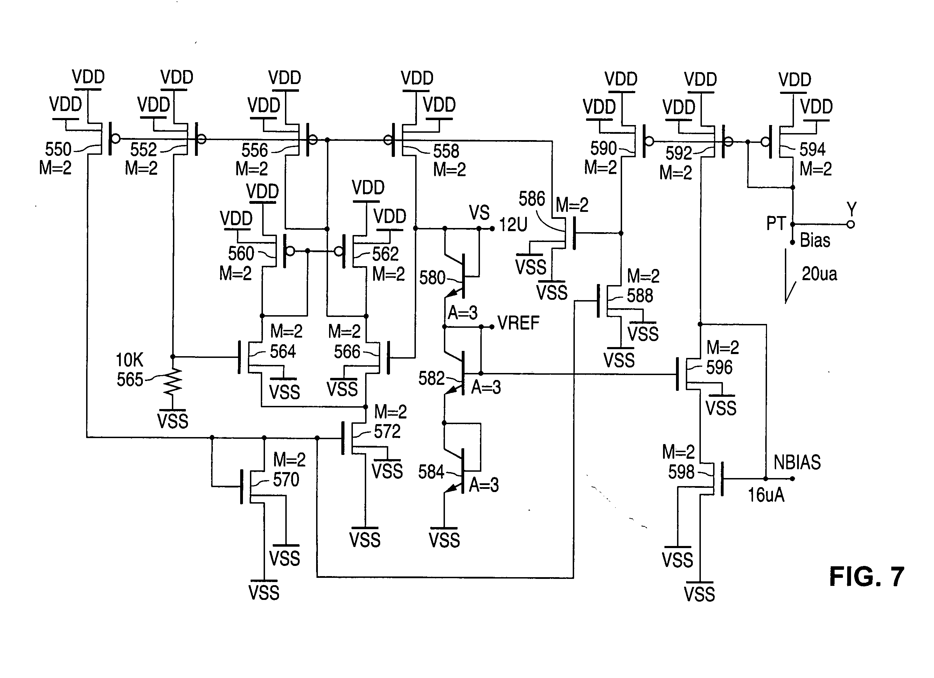

Figure 7 is a transistor level circuit diagram illustrating one embodiment of a low noise voltage and current bias source suitable for use with the embodiments illustrated in Figures 4-6;

Figure 8 is a circuit diagram illustrating another embodiment of a circuit in accordance with one aspect of the present invention, involving the use of a switch in order to reduce the size of the gyrator capacitor of Figure 2;

Figure 9 is a functional block and transistor circuit diagram illustrating one embodiment of a circuit in accordance with another aspect of the present invention for converting a signal to pulse-width-modulation encoding; and

Figure 10 is a waveform diagram illustrating a function of an embodiment of the control logic of Figure 9.

DETAILED DESCRIPTION OF THE INVENTION

One aspect of the present invention demonstrates how to produce a Caller ID and line monitor interface that overcomes some of the disadvantages of the prior art,and can be implemented in low cost IC technology including complementary metal-oxide semiconductor (CMOS) technology that is typically used to implement A/D and digital signal processing while using minimum cost external components.

What is disclosed is a Caller ID and call monitor interface pre-amplifier and analog signal processor that uses low cost resistors in the interface without expensive high voltage high tolerance capacitors and a pre-amp analog signal processor design using transconductance amplifiers that can be implemented on low cost CMOS processes on which the Caller ID A/D and DSP processor is also fabricated. Also, disclosed is a PWM A/D converter that has advantages when used with the pre-amplifier.

The telephone line isolation barrier interface consists of high resistance (e.g. multiple Mega ohm value) 1% tolerance resistors. These resistors carry sufficient signal to the pre-amp to meet the maximum noise requirements for demodulation of a minimum Caller ID signal while also meeting regulatory and functional isolation requirements.

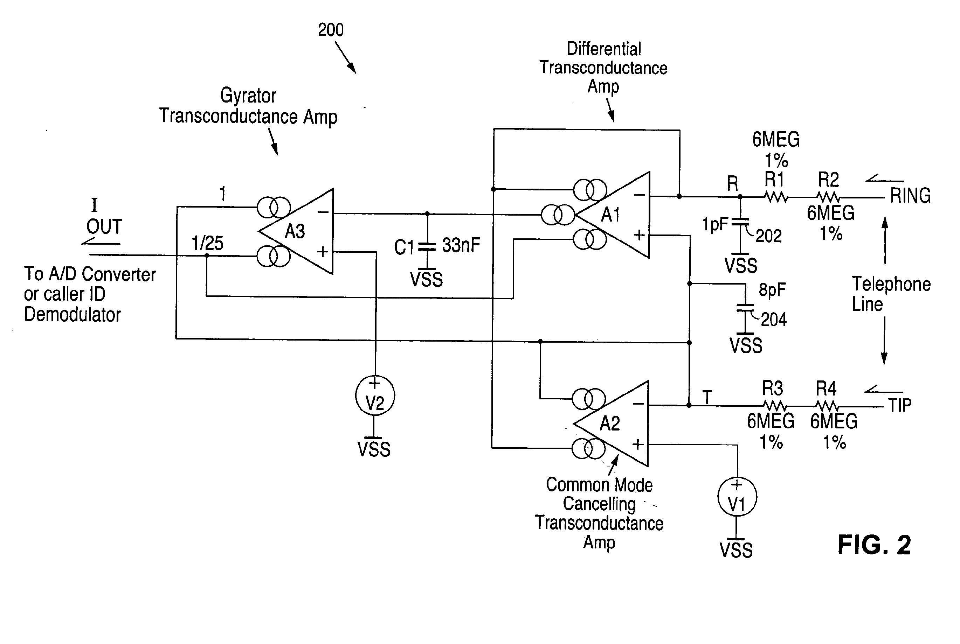

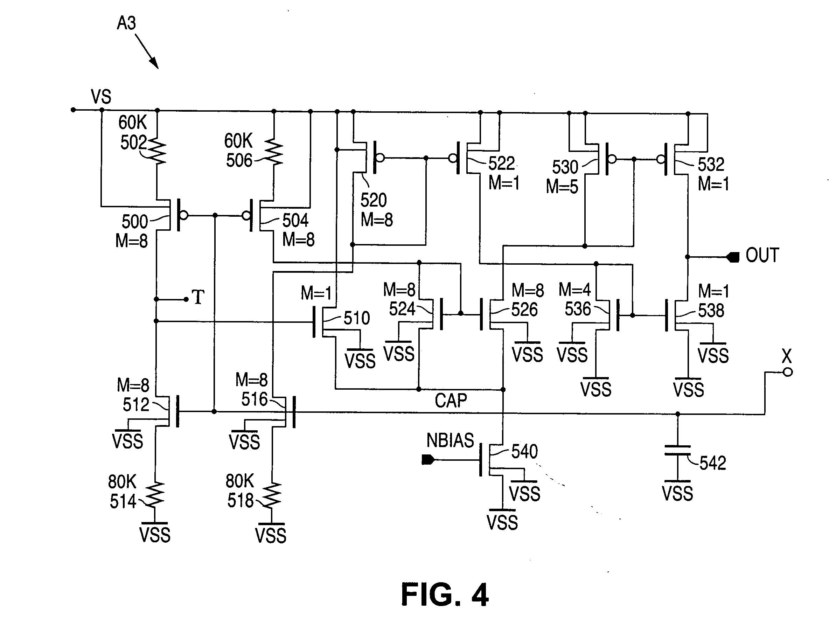

Fig. 2 shows an embodiment of the front end pre-amplifier analog signal processor, according to one aspect of the present invention, that generates a signal suitable for output to an A/D converter or Caller ID demodulator. It generally consists of three transconductance amplifiers with multiple outputs which implement 4 major signal processing functions: 1) canceling of common mode currents passing through isolation resistors R1-R4; 2) differential to single ended conversion of the differences currents, the line voltage signal, passing through the isolation resistors; 3) removal of most of the difference currents arising from the line DC voltage, rolling off the AC response below 600Hz by 6dB per octave; and 4) reintroduction of a small fraction of the DC line current signal back into the output so as to allow measurement of the DC line voltage and polarity. Fig. 3 is a frequency response graph that illustrates the differential frequency response of the pre-amplifier.

A common misconception for isolated interfaces is the belief by many engineers that insulation type of isolation is required where essentially no DC current can flow across the barrier. The isolation characteristics are determined by safety requirements and functional requirements. Regulatory requirements are usually very comprehensive with regard to safety, but also include some functional requirements mostly in regard to functional harm to the telephone network. However, not all real functional requirements are included in the regulatory requirements or even recommended standards not required.

The input resistors R1-R4 of Figure 2 provide high levels of both DC and AC electrical isolation. In the embodiment shown, the input resistors from each side of the telephone line (e.g. the TIP and RING) to the pre-amp input have a total series resistance value of 12Meg ohm. In the embodiment shown, each of the two input legs are formed by multiple resistors of the same value. Multiple low cost, 1% resistors are used in this embodiment for two reasons: 1) to improve matching; and 2) to improve breakdown voltage both functionally and to meet safety regulatory construction requirements for isolation required by European EN60950 and other national standards. Use of the high resistance resistors satisfies safety leakage requirements that specify less than 0.25 mA for even the most stringent standards of leakage current with normal line AC line voltage across the isolation barrier.

High resistance value (e.g. multiple Mega ohm size) resistors are necessary when using small low cost 1% resistors in order to survive excess thermal heating during the standard 1 minute 1000 VAC breakdown test voltage for US systems or 1500 VAC test voltage for European systems. For example, the combined parallel resistance of R1-R4 between telephone line and pre-amp input is 6 Mega ohms. If 1500V RMS is applied across this, then the thermal dissipation will be $V^2/R$ or 375 mW. If four low cost 1206 size resistors are used, then each will dissipate 94 mW, less than their normal 125mW specified long term limit. For European or other national systems, which have 220VAC mains, EN60950 specifies isolation construction limits in terms of minimum creepage distances of 2.5mm and may require two devices in series, which pass the test voltage. Consequently, for European and other national systems, more than two resistors in series may be required to meet these requirements. Despite this, 1% 1206 surface mount resistors are extremely low cost, typically selling for less than $0.004 each in high volume.

The input resistor network develops currents into input nodes R and T that are exactly proportional to the input common mode voltage between Tip and Ring and pre-amp voltage reference V1 and differential voltage between Tip and Ring. The common mode signal is removed by the transconductance amplifier A2, which has dual balanced outputs: one that is connected to T and the other that is connected to R. The inverting input of amplifier A2 is tied to T, while the non-inverting input is tied to a voltage reference that is chosen by the designer to be optimal for headroom and other transconductance amplifier characteristics for the desired application, such as drive current levels, noise, and technology. Due to the negative feedback current from the output of amplifier A2 to the inverting node T, the current arising from the voltage developed across R3 and R4 due to the voltage between Tip and node T, node T is served to the same voltage as the reference voltage V1 on the positive input. The other output adds the same common mode current to the node R input in order to cancel the common mode current going into node R arising from the same common mode voltage on the Tip line and developed across resistors R1 and R2. The non-zero remaining current going into node R is the difference current going into nodes T and R and is proportional to the differential voltage between Tip and Ring.

The difference current on node R is converted to a single ended output current by transconductance amplifier A1, which has 3 current outputs. One of the current outputs is used to cancel the difference current into the R input. Since multiple outputs of a transconductance amplifier track each other, but the output gains may be set to different values, the other two outputs provide currents proportional to the difference signal current representative of the differential voltage between Tip and Ring independent of the common voltage. One signal output may be directed to a receiving A/D converter or Caller ID demodulator and its gain can be scaled as needed. The third output is used by a gyrator feedback circuit that includes gyrator transconductance amplifier A3.

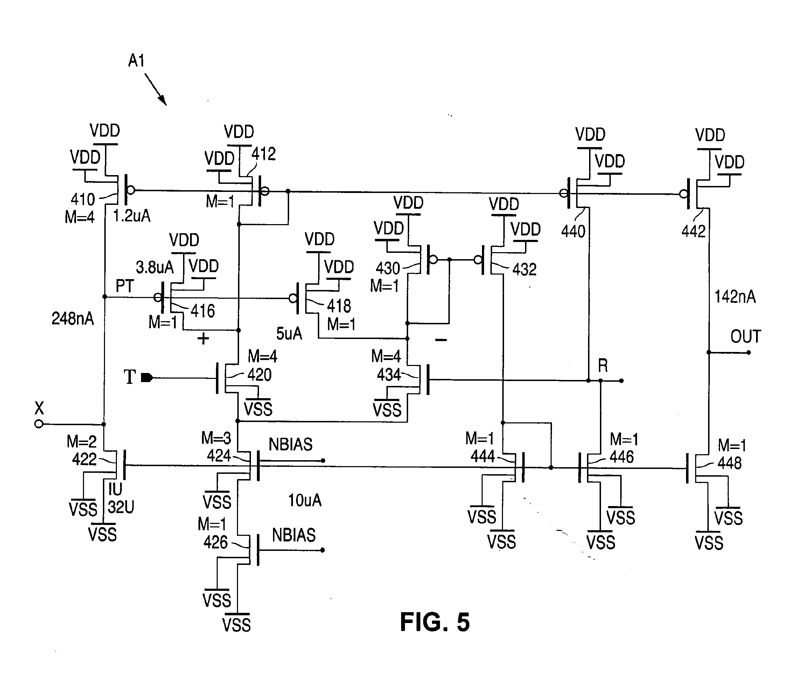

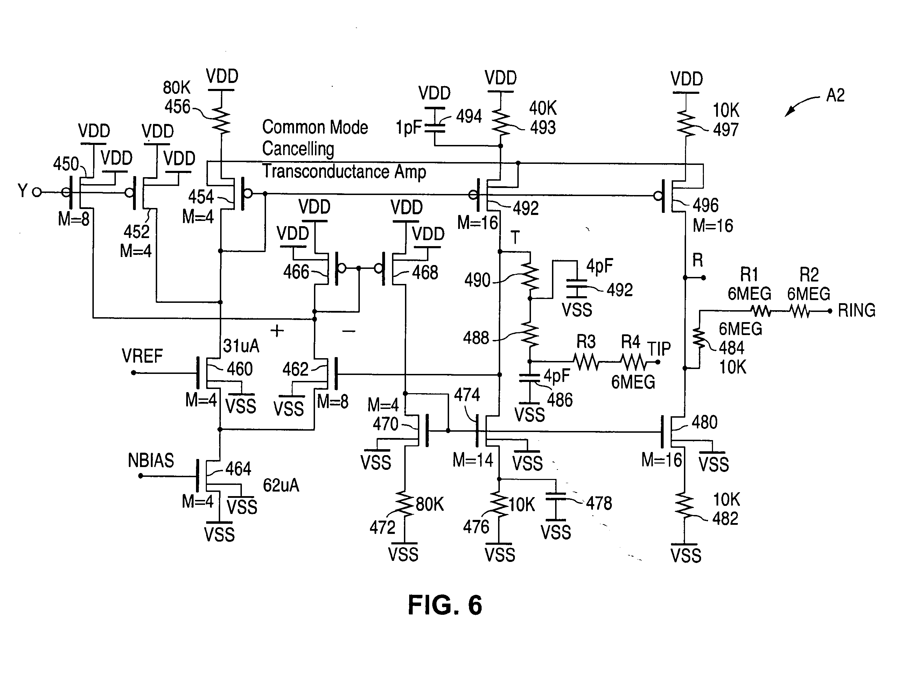

Transconductance amplifiers A1 and A2 typically only need low transconductance gains. In the CMOS implementation illustrated in Figures 5 and 6, respectively, amplifier A1 has a gain of about 500 micro Siemens for its main output and a gain of 2 milli Siemens for the output driving capacitor C1. Amplifier A2 typically has a gain of 750 micro Siemens. Amplifier A2 is typically the largest noise contributor because of the large output common mode current swings in excess of 20uA. Consequently, amplifier A2 includes large source degeneration resistors in the output mirrors (e.g. the mirrors that generate current at nodes T and R) that reduce gate noise voltage contributions of the mirror MOS transistors.

Transconductance amplifier A3 in conjunction with capacitor C1 form a gyrator circuit that removes most of the DC component from the differential signal present at node R. Amplifier A3 has two outputs, one that provides a DC canceling current into node T and the other that provides a DC current and polarity proportional to the voltage between Tip and Ring, which may be sent to a DC signal processing circuit that may be the same A/D converter as used for the Caller ID or Line Monitor, in which case the signal is combined with the AC output signal from A1. However, if the Caller ID A/D is AC only, then this gyrator DC output may be directed to a separate, simpler, DC and polarity A/D processor.

The gyrator circuit works by providing current feedback that removes the difference current into nodes R and T. The feedback gain is indirectly proportional to frequency. Above the cut off comer, usually set around 600Hz (as illustrated in Figure 3), the gyrator provides very little canceling current or has loop gain of less than unity. At frequencies below the 600Hz comer, the total pre-amp gain is reduced. The roll off comer frequency is proportional to the open loop transconductance gain of amplifier A3 and the output ratio of the amplifier A1 output that drives C1 to the feedback output into R, but inversely proportional to the capacitance value of capacitor C 1.

The gain of gyrator transconductance amplifier A3 may be relatively quite low even with a fairly small external discrete capacitor of 33nF. In the example of Figure 2, the main output of amplifier A3, which drives node T, has a gain of about 20 micro Siemens. In order to minimize noise contributions from this amplifier, it can be designed to accept a large input voltage range, such as 2V or more, on capacitor C1.

There are several additional advantages to the above pre-amplifier structure. For example, stability design is significantly simplified by using transconductance amplifiers, since the dominant feedback stability roll off pole on all three transconductance amplifiers is achieved by capacitance to ground on their inverting inputs. These inputs already have capacitance to ground either from input/output (I/O) pin capacitance, typically several pF, or from the gyrator capacitor C1. Adding more capacitance to these inputs does not generally create any more poles in the response. Also, the current output may be very accurate, e.g. to within 1%, since it is set by the input resistor tolerances, which are typically better than 1%, and the IC matching tolerances, which are also typically much better than 1%. If this current is used to charge a capacitor in a PWM A/D converter, then the conversion accuracy can be made much better than a typical +-20% IC resistor accuracy, since capacitors on modern CMOS processes tend to be very accurate, typically within less than 5%, and voltage can be accurately generated by bandgaps to within 2-3% without trimming.

In some IC gyrator designs, it may be desirable for capacitor C1 to be an external component, since 33nF is typically too large of a capacitance value to be practically implemented in silicon processes. Also, use of an external capacitor C1 allows designers to adjust the roll off corner frequency of the circuit. However, it may also be desirable to eliminate the need for the external capacitor as a cost and IC pin reduction.

It is also possible to scale capacitor C1 down by a 1000 fold to 33pF by scaling the transconductance output from amplifier A1 by 1000 fold using well known current mirror gain reduction circuit techniques. The resulting bias currents are so low, e.g. less than 100pA, that significant errors can arise both from leakage and from modeling errors of both MOS and Bipolar transistors in their linear regions. In addition, because the currents are so low through the mirror, the mirror can become extremely slow causing stability problems by adding significant response poles.

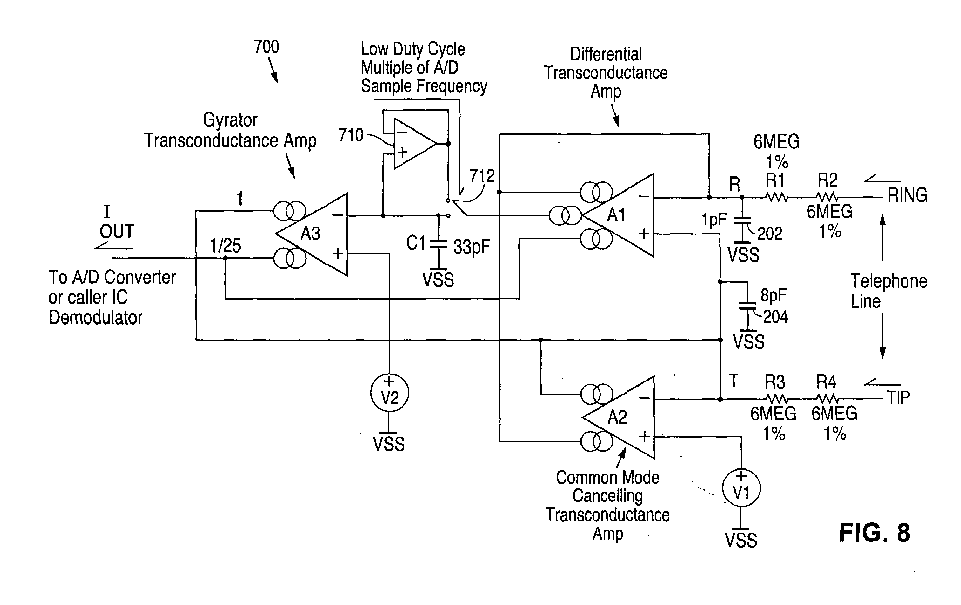

Nonetheless, as illustrated in Figure 8, it is possible to use a low value IC capacitor for capacitor C1 of the magnitude of approximately 33pF by using a low duty cycle driven switch 712 between the output of amplifier A1 and capacitor C1. The switch may be driven at multiples of the basic audio sampling rate and with a duty cycle of about 1/1000. Small CMOS switches have extremely low leakage and charges on a 33pF capacitor can be maintained for seconds if the voltage on capacitor C1 drives only MOS input amplifiers and the switch junction is very small, typically less than 1 square micron. Leakage across a minimum geometry MOS switch on modem high speed process is typically only about 1pA even with a large voltage across the switch. However, with the voltage follower implementation described below, the voltage across the switch can be very low, e.g. less than 10mV, making leakage across the switch even less likely. When the switch 712 is turned on, its on resistance is on the order of 10K. However, this resistance has little effect on the time constant of the circuit since it is driven by a much higher impedance current source from the output of transconductance amplifier A1. This output, when not connected to capacitor C1, is connected to a voltage buffer 710 that follows the voltage on capacitor C1 so that the capacitance on the output of the transconductance amplifier is at the same potential as capacitor C1 in order to minimize charge transfer when switching.

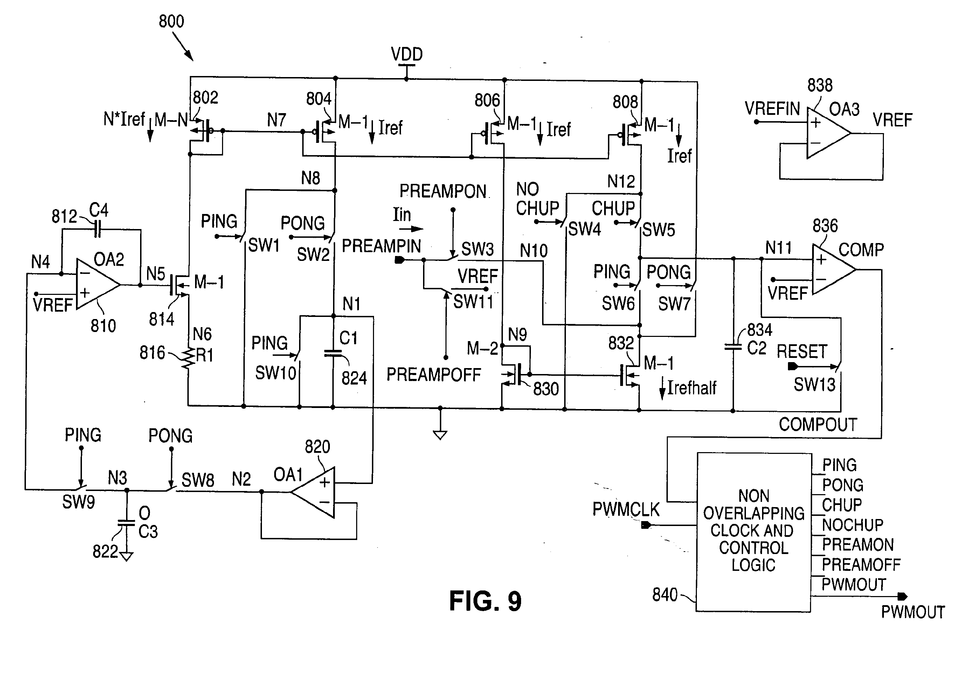

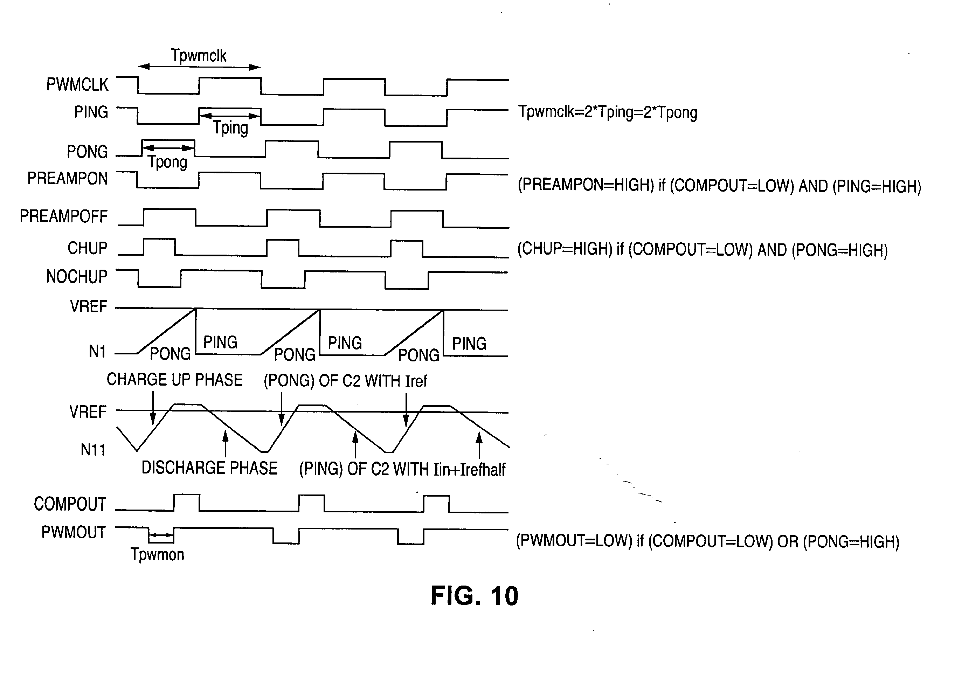

Another aspect of the present invention involves the use of a Caller ID or Line Monitor Pulse Width Modulation (PWM) Analog to Digital Converter. Figure 9 is a functional block and transistor circuit diagram illustrating one embodiment of a circuit in accordance with another aspect of the present invention for converting a signal to pulse-width-modulation encoding. Figure 10 is a waveform diagram illustrating a function of an embodiment of the control logic of Figure 9. The basic function of the PWM A/D Converter illustrated in Figure 9 is to convert the current output from Caller ID or Line Monitor PREAMP embodiments of Figures 2 or 8 to PWM.

The timing of the circuit of Figure 9 is controlled by digital clock signal PWMCLK (50% duty cycle, in our case frequency can be set in several steps from 58kHz to 80kHz) from which non-overlapping switch control signals like PING, PONG, CHUP, NOCHUP, PREAMPON and PREAMPOFF are derived (see Figure 10). ed Non-overlapping control signals are needed in order for the circuit to function correctly so that there is correct charge distribution to and from capacitances C1, C2, C3 and C4 of Figure 9 (capacitors 824, 834, 822, and 812, respectively). For the purposes of this description, two digital signals are non-overlapping if they are not going from high-to-low or from low-to-high at the same time. In other words, if the first signal goes from high-to-low, then the second signal does not go from low-to-high until the first one is no longer low (typical delay is around ~1ns), then the signals are non-overlapping.

The function of one embodiment of the non-overlapping clock and control logic 840 of Figure 9 will now be described in the context of the signal waveforms illustrated in Figure 10. Note that, in Figure 10, the PING signal is equal to PWMCLK and the PONG signal is an inverted PING signal. PING and PONG are non-overlapping signals: The PREAMPON signal is high if the COMPOUT signal is low and the PING signal is high. The PREAMPOFF signal is an inverted PREAMPON signal. PREAMPON and PREAMPOFF are non-overlapping signals. CHUP is high if COMPOUT is low and PONG is high. NOCHUP is inverted CHUP. CHUP and NOCHUP are non-overlapping signals. Each of the switches shown in Figure 9 is ON when its corresponding controlling signal is high and OFF when the controlling signal is low. The PWM output is always high during a PING active phase and goes low during a PONG active phase for the time Tpwmon, which is directly proportional to current Iin, as will be shown below. The non-overlapping control signals are generated by control logic circuit 840, which is a digital circuit configured to generate control signals PING, PONG, CHUP, NOCHUP, PREAMPON, PREAMPOFF and PWMOUT from the input signals PWMCLK and COMPOUT. One of ordinary skill in the art will recognize that it is possible to implement control logic 840 in a variety of ways, such as by utilizing basic digital circuits or a controller.

The circuit shown in Figure 9 can be viewed as being divided into two parts. The first part is the calibrating loop generating the reference current Iref and the second part is the actual conversion of PREAMP output current into the PWM.

The loop generating the reference current Iref consists of capacitor 824 (capacitance C1), operational amplifier 820, and capacitor 822 (C3), switches SW8, SW9, operational amplifier 810, transistor 814 (MN3), resistor 816 (R1), transistors 802 (MP1) and 804 (MP2) and switches SW1, SW2, and SW11. The general purpose of this part of the circuit of Figure 9 is to create a reference current Iref that has low dependence on process and temperature.

The circuit of Figure 9 works as follows: During the PONG phase, the capacitor 824 (C1) is charged with the current Iref and voltage at node N11 is buffered with unity gain to node N3. During the PING phase, the switch SW8 is switched OFF and capacitor 822 (C3), where the maximum voltage from the PONG phase is stored, is connected via switch SW9 to the integrator input (where the integrator includes amplifier 810 and 812). The voltage at the integrator output node N5 is changed by

$$\Delta V = (VN3 - Vref)*C3/C4 = (VN1 - Vref)*C3/C4 \tag{1},$$

where it is assumed that VN1=VN3.

By changing VN5 (the voltage at node N5) the current Iref is changed. During the PING clock phase, the capacitor 824 (C1) is always discharged to 0V. The equilibrium point is reached when the current Iref is such that voltage at node N1 (VN1) reaches the voltage Vref at the end of PONG phase. Then for VN1 =VN3=Vref, equation (1) becomes $\Delta V = (VN3 - Vref)*C3/C4 = (VN1 - Vref)*C3/C4 = 0V$, which means that the voltage at node N5 and thus also Iref stay constant. From that, we can write for the value of Iref :

$$Iref = C1*Vref/Tpong = C1*Vref / (Tpwmclk/2) \tag{2},$$

since Tpwmclk=2*Tpong=2*Tping.

Now we address the actual conversion of Caller ID Line Monitor PREAMP output current Iin to a PWM encoded signal. During the PONG phase (CHUP=high), the capacitor 834 (C2), where capacitances of capacitors 834 and 824 are equal (C2=C1), is always charged up with current Iref (switch SW5 is ON) until the voltage at node N11 is higher than VREF and the output signal COMPOUT from comparator 836 (COMP) goes high, which causes CHUP to go low and switch SW5 to be turned OFF. The voltage at N11 stays constant at a value slightly higher than VREF (typically a few mVs) until it is charged down in PING phase. In the PING phase, the capacitor 834 (C2) is, for a brief moment, charged down with current Irefhalf=Iref/2 (SW6 is ON). When the voltage N11 goes lower than VREF, then COMPOUT from comparator 836 output goes low causing the digital signal PREAMPON to go high thereby connecting PREAMP output current Iin (SW3 is ON). In this way, it is assured that if the current source from PREAMP is, for whatever reason, larger than Irefhalf, then the node N11 is not accumulatively charged up in every PING phase, which would cause N11 to go much higher than VREF - a condition from which the system may not recover. So, during PING phase, the capacitor 834 (C2) is discharged down with current Iin+Irefhalf. The system is thus designed in such a way that the maximum current from PREAMP, which we want to process without clipping, is Iin<Irefhalf. We can now write equation (3) for the time interval when PWM is low (Tpwmon - time proportional to Iin):

$$(Iref/C2) * Tpwmon = (Tpwmclk/2) * ((Iref/2) + Iin) /C2 \text{ and from that for}$$

$$Tpwmon : Tpwmon = (Tpwmclk/4) + (Iin/Iref) * Tpwmclk/2 = (Tpong/2) +$$

$$(Iin/Iref) * Tpong \tag{3}$$

In this way, the input current Iin may be converted into the time interval Tpwmon. Tpong, Tpwmclk and Iref are constants in a given system.

Conclusion:

From the equations above, one of ordinary skill in the art will appreciate that the present invention reduces the dependence of the A/D converter gain on process and temperature variations. By keeping the gain variations small, the dynamic range of the system is increased.

If the errors resulting from component mismatch are ignored, which can be kept fairly small, e.g. < 1%, the reference current Iref is dependent mainly upon variation of the capacitance C1 of capacitor 824, and also of capacitor 834 since C1=C2, with process (temperature dependence is negligible), accuracy of Vref (can be Bandgap type reference with tolerance +- 3 to +-5% over process and temperature) and on PWMCLK, which can be typically derived from a crystal oscillator and is can be extremely accurate. Thus, a total variation of Iref in the range of +- 5 to +-10% can be achieved as opposed to about a range of +-30% to +-50% variations (depending on technology) when the Iref is generated in conventional ways (e.g. using on- chip components) by voltage over resistor.

The present invention is able to use resistors in a caller ID circuit interface to interface to the tip and ring of a telephone line pair. Accurate resistors are cheaper and, in many applications, work better than capacitors in resistor capacitor networks and can satisfy regulatory and functional requirements, which is contrary to conventional wisdom regarding isolation techniques. Also, resistors can give much better common mode rejection than a conventional RC network. Further, the use of a current output for the caller ID signal may be used for PWM conversion.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) are to be construed to cover both the singular and the plural, unless otherwise indicated herein or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Of course, variations of those preferred embodiments will become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

**EP 1 450 546 A2**

**Claims**

1. A telephone line interface circuit, the circuit comprising:

a differential transconductance amplifier having inverting and non-inverting inputs, a single ended output and first and second differential outputs, where the inverting input is coupled to a first terminal of the telephone line pair through a first series of high resistance value resistors, the non-inverting input is coupled to a second terminal of the telephone line pair through a second series of high resistance value resistors, and the second differential output is coupled to an output terminal of the circuit;

a common mode canceling transconductance amplifier having inverting and non-inverting inputs and first and second differential outputs, where the inverting input of the common mode canceling transconductance amplifier is coupled to the second terminal of the telephone line pair through the second series of high resistance value resistors, the non- inverting input of the common mode canceling transconductance amplifier is configured to receive a first reference voltage, the first differential output and the inverting input of the common mode canceling transconductance amplifier are coupled, and the second differential output of the common mode canceling transconductance amplifier is coupled to the inverting input of the differential transconductance amplifier;

a gyrator transconductance amplifier having inverting and non-inverting inputs and first and second differential outputs, where the inverting input of the gyrator transconductance amplifier is coupled to the single ended output of the differential transconductance amplifier, the non- inverting input of the gyrator transconductance amplifier is configured to receive a second reference voltage, the first differential output of the gyrator transconductance amplifier is coupled to the inverting input of the common mode canceling transconductance amplifier, and the second differential output of the gyrator transconductance amplifier is coupled to the output terminal of the circuit; and

a capacitor coupled between the inverting input of the gyrator transconductance amplifier and a power supply terminal.

2. The circuit of claim 1, the circuit further including a pulse width modulation (PWM) analog-to-digital (A/D) converter for converting a current signal at the output terminal of the circuit to a PWM encoded signal.

3. The circuit of claim 2, where the PWM A/D converter includes a control circuit for generating non-overlapping clock and control signals and PWM conversion circuitry, where the non-overlapping clock and control signals drive the PWM conversion circuitry to generate a comparison output signal responsive to the current signal at the output terminal of the circuit, and the control circuit generates the non-overlapping clock and control signals and the PWM encoded signal responsive to a reference clock signal and the comparison output signal.

4. The circuit of any one of the preceding claims, the circuit further including a switch disposed between the singled ended output of the differential transconductance amplifier and both the inverting input of the gyrator transconductance amplifier and the capacitor.

5. The circuit of claim 4, where the capacitor is a component of an integrated circuit that includes the differential transconductance amplifier, the common mode canceling transconductance, and the gyrator transconductance amplifier.

6. The circuit of any one of the preceding claims, where the capacitor is an external component to an integrated circuit that includes the differential transconductance amplifier, the common mode canceling transconductance, and the gyrator transconductance amplifier.

7. The circuit of any one of the preceding claims, where the high resistance value resistors are 1% tolerance resistors.

8. A method for interfacing to a telephone line, the method comprising the steps of:

developing currents at circuit nodes T and R that are proportional to an input common mode voltage between Tip and Ring terminals of the telephone line; canceling a common mode signal at circuit nodes T and R by generating a differential pair of common mode current signals from a common mode signal present at circuit node T;

generating a set of current signals that are proportional to a difference signal current at circuit node R that is representative of a differential voltage between Tip and Ring;

generating a direct current (DC) canceling current from a first one of the set of current signals that are proportional to a difference signal current at circuit node R; and

adding the DC canceling current to circuit node T.

9.  The method of claim 8, the method further including the step of providing a frequency response pole having a predetermined cut-off frequency.

10. The method of claim 8 or claim 9, the method further including the step of generating a DC current and polarity signal proportional to the voltage between Tip and Ring from another one of the set of current signals that are proportional to a difference signal current at circuit node R.

11. The method of claim 10, the method including the step of converting the DC current and polarity signal to a pulse-width-modulation (PWM) encoded signal.

12. The method of any one of claims 8 to 11, the method including the step of converting one of the set of current signals that are proportional to a difference signal current at circuit node R to a pulse-width-modulation (PWM) encoded signal.

13. The method of any one of claims 8 to 12, where the step of generating a set of current signals includes the step of canceling the difference signal current at circuit node R using a second one of the set of current signals;

14. The method of any one of claims 8 to 13, where the step of canceling a common mode signal further comprises the steps of:

comparing the common mode signal at circuit node T to a first reference voltage in order to generate a negative feedback current and a common mode current; adding the negative feedback current to circuit node T; and

adding the common mode current to circuit node R.

15. The method of any one of claims 8 to 14, where the step of developing currents at circuit node T and R further comprises electrically coupling to the Tip and Ring terminals through a network of high resistance value resistors.

16. The method of any one of claims 8 to 15, where the step of canceling a common mode signal at circuit nodes T and R by generating a differential pair of common mode current signals from a common mode signal present at circuit node T includes generating the differential pair of common mode current signals using a transconductance amplifier.

17. The method of any one of claims 8 to 16, where the step of generating a set of current signals that are proportional to a difference signal current at circuit node R that is representative of a differential voltage between Tip and Ring includes generating the set of current signals that are proportional to the difference signal current at circuit node R using another transconductance amplifier.

18. The method of any one of claims 8 to 17, where the step of generating a direct current (DC) canceling current from a first one of the set of current signals that are proportional to a difference signal current at circuit node R includes generating the DC canceling current using still another transconductance amplifier.

19. The method of any one of claims 8 to 18, the method including the step of converting one of the set of current signals that are proportional to a difference signal current at circuit node R to Caller ID data.

20. The method of any one of claims 8 to 19, the method including the step of converting one of the set of current signals that are proportional to a difference signal current at circuit node R to a digital output signal representing DC voltage level and voltage polarity.

**21.** A telephone line interface device, the device comprising:

high resistance interface means for developing currents at circuit nodes T and R that are proportional to an input common mode voltage between Tip and Ring terminals of the telephone line;

common mode canceling transconductance amplifying means for canceling a common mode signal at circuit nodes T and R by generating a differential pair of common mode current signals from a common mode signal present at circuit node T;

differential transconductance amplifying means for generating a set of current signals that are proportional to a difference signal current at circuit node R that is representative of a differential voltage between Tip and Ring; and

gyrator transconductance amplifying means for generating a direct current (DC) canceling current from a first one of the set of current signals that are proportional to a difference signal current at circuit node R and adding the DC canceling current to circuit node T.

**22.** The device of claim 21, the device including low noise voltage and current bias source means for biasing the common mode canceling transconductance amplifying means, the differential transconductance amplifying means, and the gyrator transconductance amplifying means.

**23.** The device of claim 21 or 22, the device including pulse-width-modulation (PWM) encoding means for converting the DC current and polarity signal to a pulse-PWM encoded signal.

**24.** The device of claim 23, where the PWM encoding means further includes:

control means for generating non-overlapping clock and control signals; and

PWM conversion means for generating a comparison output signal responsive to the DC current and polarity signal under control of the non-overlapping clock and control signals,

where the control means generates the non-overlapping clock and control signals and the PWM encoded signal responsive to a reference clock signal and the comparison output signal.

**FIG. 1a**

**FIG. 1b**

**FIG. 3**

FIG. 2

A3

VS

60K 502

60K 506

500 M=8

504 M=8

520 M=8

522 M=1

530 M=5

532 M=1

OUT

T

M=1 510

M=8 524

M=8 526

M=4 536

M=1 538

VSS VSS VSS VSS VSS

VSS VSS

M=8 512

M=8 516

CAP

X

VSS VSS

80K 514

80K 518

NBIAS

540

VSS

542

VSS

VSS VSS VSS

**FIG. 4**

EP 1 450 546 A2

FIG. 5

**FIG. 6**

EP 1 450 546 A2

FIG. 7

EP 1 450 546 A2

FIG. 8

FIG. 9

EP 1 450 546 A2

**FIG. 10**

PWMCLK

PING — Tpwmclk=2*Tping=2*Tpong

PONG

PREAMPON — (PREAMPON=HIGH) if (COMPOUT=LOW) AND (PING=HIGH)

PREAMPOFF

CHUP — (CHUP=HIGH) if (COMPOUT=LOW) AND (PONG=HIGH)

NOCHUP

VREF

N1 — PONG PING PONG PING PONG PING

CHARGE UP PHASE      (PONG) OF C2 WITH Iref

VREF

N11

DISCHARGE PHASE      (PING) OF C2 WITH Iin+Irefhalf

COMPOUT

PWMOUT — (PWMOUT=LOW) if (COMPOUT=LOW) OR (PONG=HIGH)

Tpwmon

EP 1 450 546 A2